# EUROPEAN PATENT SPECIFICATION

(11) **EP 4 199 283 B1**
(45) Date of publication and mention of the grant of the patent: **05.11.2025**
(21) Application number: 21900035.3
(22) Date of filing: 01.12.2021
(51) Int. Cl.: H02G 5/06

(54) **ALTERNATING CURRENT/DIRECT CURRENT COMMON BUS DUCT, AND BUS DUCT DETECTION METHOD AND DEVICE**
GEMEINSAMER WECHSELSTROM-/GLEICHSTROM-BUSKANAL SOWIE VERFAHREN UND VORRICHTUNG ZUR ERKENNUNG EINES BUSKANALS
CONDUIT DE BUS COMMUN À COURANT ALTERNATIF/COURANT CONTINU, ET PROCÉDÉ ET DISPOSITIF DE DÉTECTION DE CONDUIT DE BUS

(30) Priority: 01.12.2020 CN 202011392888
(43) Date of publication of application: 21.06.2023
(73) Proprietor: China Mobile Group Design Institute Co., Ltd., Beijing 100080 (CN); CHINA MOBILE COMMUNICATIONS GROUP CO., LTD., Beijing 100032 (CN)
(72) Inventor: LIU, Feng, Beijing 100080 (CN); WANG, Haibao, Beijing 100080 (CN)
(74) Representative: J A Kemp LLP
(86) International application number: PCT/CN2021/134865
(87) International publication number: WO 2022/117009

(56) References cited:
- EP-B1- 3 258 558
- CN-A- 105 162 257
- CN-A- 108 512 170
- CN-U- 204 030 500
- CN-U- 204 030 500
- CN-U- 205 319 652
- CN-U- 205 319 652
- CN-U- 205 404 236
- CN-U- 209 860 544
- CN-U- 209 860 544
- CN-U- 210 007 321
- US-A- 5 466 889

## Description

### TECHNICAL FIELD

The invention relates to the technical field of power transmission devices, and in particular to an alternating current (AC)/direct current (DC) common busbar, a method for detecting performance of a bus bar, and a system with a device for detecting performance of a bus bar.

### BACKGROUND

Busbar is a closed metal device composed of copper and aluminum bus columns, and is configured to distribute higher power to various elements of a decentralized system. In an indoor low-voltage power transmission main line project, the busbar has increasingly replaced wires and cables. During usage, there is a requirement for the busbar to connect to both AC bus and DC bus. Therefore, in a practical usage requirement, it is usually necessary to use a common busbar to connect to both AC bus and DC bus simultaneously. Although an existing common busbar is able to be connected with the AC bus on one side and with the DC bus on the other side, it is inconvenient to carry out separate checking and maintenance, in case of failure or daily maintenance. Furthermore, in case that the common busbar is connected to the AC bus or the DC bus individually, other positions of the common busbar will be exposed outside, which will lead to the busbar being easily damaged and affect power transmission effect and efficiency.

Related technologies are discussed in CN204030500U, CN205319652U, US5466889A, CN209860544U, and CN108512170A.

### SUMMARY

The present invention is defined in the claims. The invention provides an AC/DC common busbar intended to solve the following defects in the related art: it is inconvenient to carry out separate checking and maintenance, in case that the busbar is connected to both AC bus and DC bus simultaneously; and in case that the busbar is connected with the AC bus or the DC bus individually, other positions of the common busbar will be exposed outside, which will lead to the busbar being easily damaged and affect power transmission effect and efficiency.

The AC/DC common busbar provided by the invention includes a base plate and at least one pair of limiting protection structure. The base plate is provided with at least one pair of bar bodies which are detachable and arranged side-by-side, a same side of each of the at least one pair of bar bodies is connected to a copper bar group, and each copper bar group includes multiple copper bars arranged at intervals. Each of the at least one pair of limiting protection structures is correspondingly mounted at a respective copper bar group. Here, the limiting protection structure is configured to be separable from a corresponding copper bar group when the corresponding copper bar group is in a use state, and is configured to be inserted into a gap between adjacent copper bars in a corresponding copper bar group when the corresponding copper bar group is in a non-use state. The AC/DC common busbar may utilize a separation and assembly structure of the limiting protection structure, to implement separate checking and maintenance in case that the busbar is connected to both AC bus and DC bus simultaneously, and implement overall protection of the copper bar group and individual protection of each copper bar in case that the busbar is individually connected to the AC bus or the DC bus, so as to effectively avoid excessive exposure of the copper bar group in an unnecessary state, and thus prevent the busbar and buses from being damaged, improving power transmission efficiency and effect effectively, reducing maintenance costs and prolonging a service life of the busbar.

The method for detecting performance of a busbar provided by the invention is configured to detect performance of the AC/DC common busbar as described above. The method for detecting performance of a busbar includes the following operations. An inspection robot is driven to slide along multiple AC/DC common busbars connected in sequence, to perform a continuous detection and obtain performance data at a joint of adjacent AC/DC common busbars, and transmit the performance data to a controller. Here, the performance data includes: voltage, current and power at the joint acquired by a bus performance sensor; a plug-in torque at the joint acquired by a deformation sensor; temperature and humidity at the joint acquired by a temperature and humidity sensor; and image data at the joint acquired by an image acquisition mechanism and identifying obstacles around the AC/DC common busbar. The method for detecting performance of a busbar may use navigation and sliding movement of the inspection robot to continuously and uninterruptedly perform performance detection at the joint of the AC/DC common busbars, thereby improving detection efficiency of the busbar. The method for detecting performance of a busbar is also capable of performing failure maintenance and trouble-shooting of the busbar by using a three-remote mode. Furthermore, the method for detecting performance of a busbar is also capable of greatly improving contents and frequencies of operation and maintenance while reducing labor costs, to achieve effect of intelligent detection.

The device for detecting performance of a busbar provided by the invention is configured to detect performance of the AC/DC common busbar as described above, the device for detecting performance of a busbar may be applicable to large-scale power transmission lines, and includes a controller and an inspection robot. The controller is in signal connection with the inspection robot to receive various data acquired by the inspection robot, the inspection robot is slidable along a length direction of the AC/DC common busbar, and the inspection robot is capable of passing through a joint of adjacent AC/DC common busbars during sliding. Here, the inspection robot includes a bus performance sensor, a temperature and humidity sensor, a deformation sensor and an image acquisition mechanism which may acquire relevant performance data at the joint of the busbars. Corresponding to the method for detecting performance of a busbar, the device for detecting performance of a busbar may use navigation and sliding movement of the inspection robot to continuously and uninterruptedly perform performance detection at the joint of the AC/DC common busbars, thereby improving detection efficiency of the busbar. The device for detecting performance of a busbar is also capable of performing failure maintenance and trouble-shooting of the busbar by using a three-remote mode. Furthermore, the device for detecting performance of a busbar is also capable of greatly improving contents and frequencies of operation and maintenance while reducing labor costs, to achieve effect of intelligent detection.

### BRIEF DESCRIPTION OF THE DRAWINGS

FIG. 1 is a schematic structural diagram of an AC/DC common busbar provided by the invention.
FIG. 2 is a schematic structural diagram of a limiting protection structure provided by the invention.
FIG. 3 is an enlarged schematic diagram of a structure at A of FIG. 1.
FIG. 4 is a top diagram of assembly of a collar and a connection rod provided by the invention.
FIG. 5 is a schematic diagram of an optional position relationship between an inspection robot and the AC/DC common busbar provided by the invention.
FIG. 6 is a schematic diagram of an optional structure of a device for detecting performance of a busbar provided by the invention.

### DETAILED DESCRIPTION

In order to make the purpose, technical solutions and advantages of the invention clearer, the technical solutions of the invention will be described clearly and completely below with reference to drawings of the invention. It is apparent that the described embodiments are merely part of embodiments of the invention, rather than all of the embodiments. Based on the embodiments of the invention, all other embodiments obtained by those of ordinary skill in the art without paying any creative work will fall within the scope of protection of the invention.

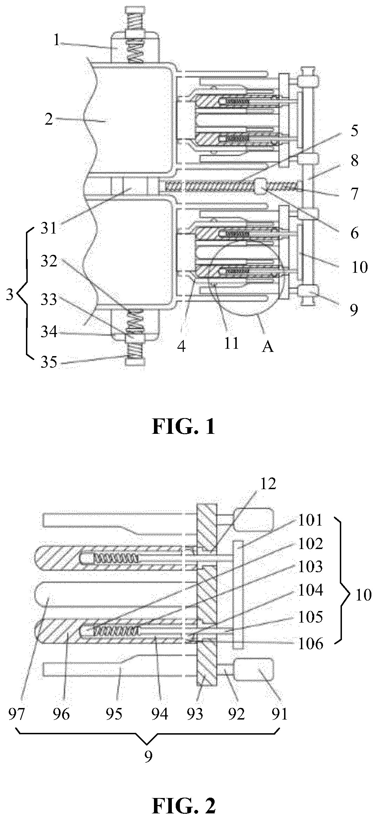

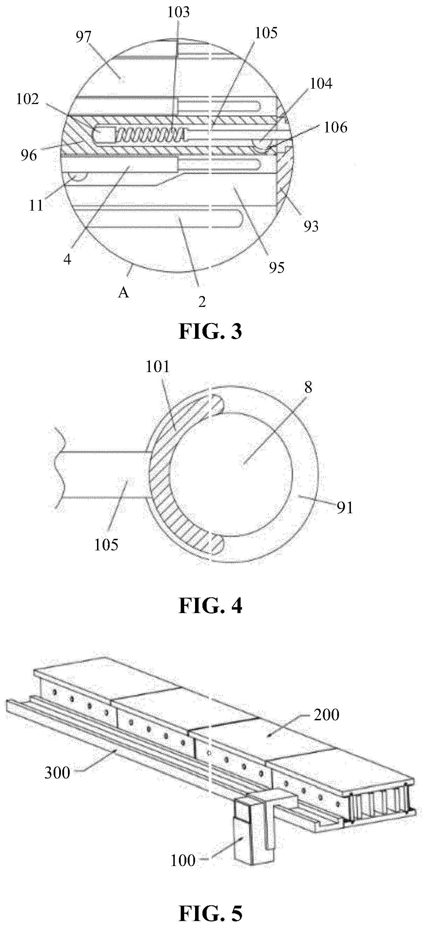

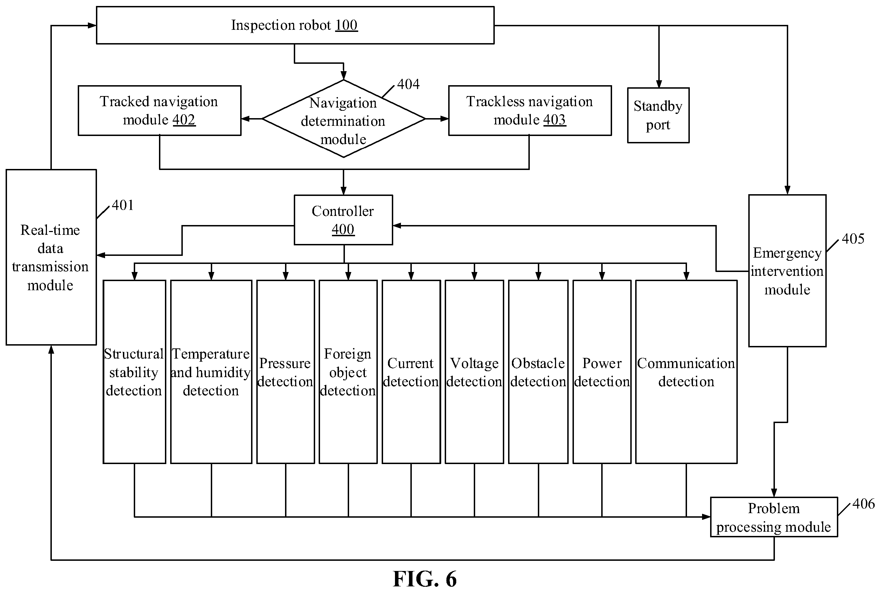

An AC/DC common busbar (abbreviated as "common busbar" in the embodiments of the invention) of the invention is described below with reference to FIG. 1 to FIG. 4, and a method for detecting performance of a busbar (abbreviated as "detection method" in the embodiments of the invention) as well as a device for detecting performance of a busbar (abbreviated as "detection device" in the embodiments of the invention) of the invention are described with reference to FIG. 5 and FIG. 6.

As shown in FIG. 1, the common busbar provided by the invention includes a base plate 1 and at least one pair of limiting protection structures 9. Here, the base plate 1 is provided with at least one pair of bar bodies 2 which are detachable and arranged side-by-side, a same side of each of the at least one pair of bar bodies 2 is connected to a copper bar group 4, and each copper bar group 4 includes multiple copper bars arranged at intervals. Each of the limiting protection structures 9 is correspondingly mounted at a respective copper bar group. Furthermore, the limiting protection structure 9 is configured to be separable from a corresponding copper bar group 4 when the copper bar group 4 is in a use state, and is configured to be inserted into a gap between adjacent copper bars in the corresponding copper bar group 4 when the copper bar group 4 is in a non-use state.

It may be understood that the common busbar described in the embodiments of the invention have a normal use state and a non-use state. Here, the common busbar in the normal use state may be connected to both AC bus and DC bus simultaneously. For example, the DC bus and the AC bus are mounted in a pair of busbar bodies 2 as described above respectively, and the copper bar groups 4 in the pair of busbar bodies 2 are all in the use state. Furthermore, the common busbar in the normal use state may also be individually connected to the AC bus or the DC bus respectively. For example, an AC bus or a DC bus is mounted in either one of the pair of busbar bodies 2 as described above, and a copper bar group 4 of the bus is in the use state; or, both AC bus and DC bus are simultaneously connected in the pair of busbar bodies 2 as described above, but only the copper bar group 4 in one of the busbar bodies 2 is in the use state, while the copper bar group 4 in the other busbar body 2 is in the non-use state and is blocked and protected by the limiting protection structure 9.

Furthermore, the common busbar in the non-use state has a maintenance state and a protection state. For example, the whole copper bar group 4 in either one of the pair of busbar bodies 2 is in a maintenance state and needs to be exposed outside and subject to maintenance and detection, while the copper bar group 4 in the other busbar body is in a protection state and is blocked and protected by the limiting protection structure 9; or, several copper bars in the copper bar group 4 of the same busbar body 2 are in the maintenance state and need to be exposed outside and subject to maintenance and detection, while the rest copper bars are in the protection state and are individually blocked and protected by the limiting protection structure 9.

It may be seen that the common busbar may utilize a separation and assembly structure of the limiting protection structure 9, to implement separate checking and maintenance in case that the busbar is connected to both AC bus and DC bus simultaneously, and implement overall protection of the copper bar group 4 and individual protection of each copper bar in case that the busbar is individually connected to the AC bus or the DC bus, so as to effectively avoid excessive exposure of the copper bar group 4 in an unnecessary state, and thus prevent the busbar and buses from being damaged, improving power transmission efficiency and effect effectively, reducing maintenance costs and prolonging a service life of the busbar.

According to the invention, as shown in FIG. 2, the limiting protection structure 9 includes at least a clamping plate assembly which is configured to block and protect copper bars and gaps there-between. Here, the clamping plate assembly includes a partition plate 93 and multiple first clamping plates 96. Multiple first clamping plates 96 are arranged at intervals, a first end of each of the first clamping plates is formed with a channel 94 respectively, each of the first clamping plates 96 is configured to be inserted into the gap between adjacent copper bars when the corresponding copper bar group 4 is in the non-use state, and copper bars in a non-maintenance state are configured to be correspondingly inserted into channels 94 of the first clamping plates 96 respectively when a corresponding copper bar is in a maintenance state. The partition plate 93 is connected to a same end of each of the first clamping plates 96, and is formed with multiple through holes 12 communicating with the channels 94 of the first clamping plates 96 respectively. The partition plate 93 may synchronously drive each of the first clamping plates 96 to move, so as to facilitate safety of disassembly and assembly of the first clamping plate 96. It may be understood that the structure between the first clamping plate 96 and the partition plate 93 is separable.

It may be understood that the first clamping plate 96 of the limiting protection structure 9 has an overall protection state and an individual protection state corresponding to states of the copper bars as described above. The first clamping plate 96 is inserted in the gap between adjacent copper bars when it is in the overall protection state, and an individual copper bar is inserted into the first clamping plate 96 via the channel 94 when it is in the individual protection state.

In some embodiments, as shown in FIG. 2 and FIG. 3, the limiting protection structure 9 further includes at least a protection assembly, which is intended to block the channel 94 of the first clamping plate 96 in the overall protection state, and generate, for the first clamping plate 96, a jacking force directing toward the bar body 2, to prevent the first clamping plate 96 from falling off from the gap between adjacent copper bars. Here, the protection assembly includes a top plate 101 and multiple protection mechanisms 10. Multiple protection mechanisms 10 are arranged at intervals, each of the protection mechanisms 10 includes a strut 105, a protection spring 103 and a top block 102, the strut 105 has a first end inserted into the channel 94 of the first clamping plate 96 and connected to the top block 102 through the protection spring 103, and a second end passing through the through hole 12 of the partition plate 93 and extending outward. The strut 105 is inserted into the channel 94 and pushes the top block 102 to be pressed against a blind end of the channel 94 under an action of elastic force of the protection spring 103, thereby generating a jacking force for the first clamping plate 96. The top plate 101 is connected to the second end of each strut 105, to perform a synchronous driving function and an overall protection function of anti-falling for each strut 105.

In order to improve structural stability and prevent copper bars from being exposed due to falling off when the first clamping plate 96 is used for blocking and protection by inserting as well as individual protection for the copper bar by being arranged around the copper bar, in some embodiments, an inner wall of the first clamping plate 96 is formed with a snapping groove 106, a sidewall of the copper bar is formed with a positioning snapping block 11, and the copper bar is inserted into the first clamping plate 96 and the positioning snapping block 11 is assembled into the snapping groove 106. Correspondingly, in some embodiments, a sidewall of the strut 105 is formed with a protective snapping block 104 configured to be assembled into the snapping groove 106 when the first clamping plate 96 is inserted in the gap between adjacent copper bars.

In some embodiments, the clamping plate assembly further includes at least a second clamping plate 97. The second clamping plate 97 has an end connected to the partition plate 93. The second clamping plate 97 is arranged between adjacent first clamping plates 96 with a gap with respect to each of the first clamping plates 96. The second clamping plate 97 may be inserted between copper bars in a gap between adjacent first clamping plates 96, to form, in combination with the first clamping plate 96, a structure plugged in a manner of interleaving with the copper bars, and thus protect the whole copper bar group 4 while preventing the copper bars from contacting to induce short-circuit.

In some embodiments, the clamping plate assembly further includes a pair of stopping plates 95. The pair of stopping plates 95 are connected to both ends of the partition plate 93 respectively and positioned on both sides of all of the first clamping plates 96. The stopping plate 95 may function to protect the copper bar group 4 from an outer side.

In some embodiments, the limiting protection structure 9 further includes a driving mechanism configured to drive separation and assembly of the protection mechanism 10. The driving mechanism specifically includes at least one pair of collars 91, a connection rod 8, a connection tube 5, a connection nut 6, and a connection bolt 7. The collars 91 are connected to the limiting protection structure 9 at intervals. The connection rod 8 is detachably inserted into each of the collars 91, as shown in FIG. 4, to flexibly adjust position of the connection rod 8, and thus facilitate separation and assembly of the plate. In some embodiments, both ends of the partition plate 93 at a side facing away from the first clamping plate 96 are connected to the collar 91 through the connection rod 92 respectively. The connection tube 5 is fixedly connected to the base plate 1 between the bar bodies 2, an end of the connection tube 5 away from the base plate 1 is fixedly connected to the connection nut 6. The connection bolt 7 has a first end connected to the connection rod 8 and a second end assembled into the connection nut 6 through threads, and is inserted into the connection tube 5 in an extensible and retractable manner. Each of the first clamping plates 96 is separated from the copper bar group 4 by pulling the connection rod 8 outward to use the collar 91 to drive the partition plate 93 connected with the first clamping plate 96 to move outward; during movement of the connection rod 8, the connection bolt 7 rotates relative to the connection nut 6 under an action of pulling force and thus extends outward from the connection tube 5, so that the driving mechanism drives the whole limiting protection structure 9 to separate from the bar body 2 and the copper bar group 4. This configuration may reduce separation and assembly operations and improve separation and assembly efficiency.

It should be noted that in some embodiments, the bar body 2 is detachably connected to the base plate 1 through a fixing mechanism 3, to facilitate disassembly and assembly of the bar body 2. Here, the fixing mechanism 3 includes a projection block 31, a pair of side plates 34, a fixing nut 33, a limiting bolt 35, and a limiting spring 32. The projection block 31 is arranged on the base plate 1, and exemplarily, the projection block 31 may be arranged in the middle of the base plate 1. The pair of side plates 34 are connected to the base plate 31 respectively and are positioned on both sides of the projection block 31 respectively, to form, between the projection block 31 and the pair of side plates 34, a pair of mounting positions where the bar body 2 is disassembled and assembled. The fixing nut 33 is fixedly connected to the side plate 34. The limiting bolt 35 is assembled into the fixing nut 33 through threads and is connected to the bar body 2 at the mounting position through the limiting spring 32. The limiting bolt 35 rotates relative to the fixing nut 33, to push the limiting spring 32 to be compressed and pressed against a side surface of the bar body 2, such that the bar body 2 is fixed in the mounting position between the side plate 34 and the projection block 31. The bar body 2 may be disassembled by executing the above operations in a reverse order only. Furthermore, in this configuration, clamping force on the bar body 2 may be flexibly adjusted by using the limiting spring 32, thereby protecting the bar body 2 by elastic force and preventing the bar body 2 from being damaged.

The invention further provides a method for detecting performance of a common busbar, configured to detect performance of the above common busbar. Here, an inspection robot slidable along a length direction of the common busbar is arranged in the length direction of the common busbar, the inspection robot is capable of passing through a joint of adjacent AC/DC common busbars during sliding, and the inspection robot includes a bus performance sensor, a temperature and humidity sensor, a deformation sensor and an image acquisition mechanism. In some embodiments not covered by the claimed invention, as shown in FIG. 5, a track 300 is arranged on a housing of a common busbar 200, and an inspection robot 100 is mounted on the track 300. The inspection robot 100 may automatically move along the track 300 and perform performance detection on a plug-in interface at a joint of the common busbars 200 according to a preset program corresponding to a detection method.

The detection method includes the following operations.

The inspection robot 100 is driven by a detection device to slide along multiple common busbars 200 connected in sequence, and the inspection robot performs a continuous detection on performance data at a joint of adjacent common busbars 200, to obtain the performance data.

Here, the performance data includes at least one of:
at least one of voltage, current or power at the joint acquired by a bus performance sensor, that is, at least one of voltage detection, current detection or power detection at the joint of the common busbars is performed by the bus performance sensor in the inspection robot, to obtain at least one of voltage, current or power at the joint;
a plug-in torque at the joint acquired by a deformation sensor, that is, pressure detection and structural stability detection at the joint are performed by the deformation sensor in the inspection robot, to obtain the plug-in torque at the joint;
at least one of temperature or humidity at the joint acquired by a temperature and humidity sensor, that is, at least one of temperature detection or humidity detection at the joint is performed by the temperature and humidity sensor in the inspection robot, to obtain at least one of temperature or humidity at the joint; or
image data at the joint acquired by an image acquisition mechanism and identifying obstacles and foreign objects around the AC/DC common busbar, that is, obstacle detection and foreign object detection around the common busbar are performed by the image acquisition mechanism in the inspection robot, to identify and obtain the obstacles and foreign objects around the busbar.

In some embodiments, the inspection robot further includes a communication detection sensor, and the above performance data further includes:
communication state data at the joint acquired by the communication detection sensor, that is, communication detection at the joint is performed by the communication detection sensor in the inspection robot, to obtain the communication state data.

It may be understood that the method for detecting performance of a common busbar may use navigation and sliding movement of the inspection robot to continuously and uninterruptedly perform performance detection at the joint of the common busbars, thereby improving detection efficiency of the common busbar. The method for detecting performance of a common busbar is also capable of performing failure maintenance and trouble-shooting of the common busbar 200 by using a three-remote mode. Furthermore, the method for detecting performance of a common busbar is also capable of greatly improving contents and frequencies of operation and maintenance while reducing labor costs, to achieve effect of intelligent detection.

In some embodiments, the inspection robot is in signal connection with a controller, and the detection method includes the following operations.

The controller determines a navigation mode, and the inspection robot is driven to move through at least a tracked navigation mode or a trackless navigation mode.

In some embodiments, the detection method may also transmit data between the controller and the inspection robot. The inspection robot transmits the detected performance data to the controller, so that the controller specifically analyzes the above-mentioned various detections and preset a range of early warning parameters with respect to various performance data, thereby starting an emergency intervention module in response to an analysis result indicating that various performance data reach a boundary of the early warning parameters or exceed a range of the early warning parameters, to correct deviation of the detected performance data with problems, and transmit the process data during deviation correction and result data to the controller to achieve an overall closed-loop control.

It should be noted that the inspection robot may transmit the performance data to the controller in real time, and it may also transmit the performance data to the controller according to a preset time interval or in case that a preset transmission triggering condition is reached. Specific selection is made according to an actual situation, which is not limited in the embodiments of the invention.

Corresponding to the structure of the common busbar 200 and the method for detecting performance of a common busbar as described above, as shown in FIG. 6, an embodiment of the invention provides s system comprising the common busbar 200 and a device for detecting performance of the common busbar, applicable to detect performance of the above common busbar 200.

As shown in FIG. 6, the detection device includes an inspection robot 100 and a controller 400. The controller 400 is in signal connection with the inspection robot 100, to receive various performance data acquired by the inspection robot 100. The inspection robot 100 is slidable along a length direction of the common busbar 200, and the inspection robot 100 is capable of passing through a joint of adjacent common busbars 200 during sliding. Here, the inspection robot 100 includes a bus performance sensor, a temperature and humidity sensor, a deformation sensor and an image acquisition mechanism, to achieve current detection, voltage detection, power detection, temperature and humidity detection, pressure detection, structural stability detection, obstacle detection and foreign object detection at the joint of the common busbars 200, to obtain related performance data.

It may be understood that corresponding to the above detection method, the detection device may use navigation and sliding movement of the inspection robot to continuously and uninterruptedly perform performance detection at the joint of the common busbars, thereby improving detection efficiency of the common busbar. The detection device is also capable of performing failure maintenance and trouble-shooting of the common busbar by using a three-remote mode. Furthermore, the detection device is also capable of greatly improving contents and frequencies of operation and maintenance while reducing labor costs, to achieve effect of intelligent detection.

In some embodiments not covered by the claimed invention, the controller is mounted within a control box. Exemplarily, the controller may be electrically connected to a DC voltmeter, sensors corresponding to various performance data, a real-time data transmission module capable of achieving wireless transmission and/or wired transmission, a memory, a positioning module, an emergency intervention module, a problem handling module, and a wired communication interface.

In some embodiments not covered by the claimed invention, the control box is connected to a detection box through a real-time data transmission module 401. The sensors are all positioned inside the detection box, and the detection box is positioned inside a plug-in box. The plug-in box is mounted at the joint of the adjacent common busbars 200. The memory is arranged within the control box. By providing the detection box, the plug-in box and the control box, multiple common busbars 200 may be connected to each other to facilitate unified management, and a user may monitor working conditions of a bus in real time, so that all performance data of the bus may be grasped by the user in real time, and when a detected value exceeds a preset early warning range, the detection device may generate an alarm.

In some embodiments not covered by the claimed invention, as shown in FIG. 6, the controller 400 is connected to a tracked navigation module 402 and a trackless navigation module 403, and the tracked navigation module 402 and the trackless navigation module 403 are connected to the inspection robot 100 through a navigation determination module 404, to control the inspection robot 100 to achieve trackless navigation movement and trackless navigation movement.

In some embodiments not covered by the claimed invention, the track 300 is arranged on a housing of the common busbar 200 shown in FIG. 5 or FIG. 6, and the inspection robot 100 is mounted on the track 300. The inspection robot 100 may automatically move along the track 300 and perform the above performance detection on a plug-in interface at a joint of the common busbars 200 according to a preset program. The inspection robot 100 may replace a human to achieve remote routine inspection, achieve special inspection and customized inspection tasks under accidents and special situations, and achieve remote online monitoring. Therefore, contents and frequencies of operation and maintenance are greatly improved while reducing labor costs, so that traditional operation and maintenance modes are changed, thereby achieving intelligent operation and maintenance. The inspection robot 100 may also freely switch between trackless navigation and tracked navigation, and have a customized camera and a variety of customized detection sensors, to detect various performance at the joint of the common busbars 200 where a connector is mounted and at pins of the plug-in box. Furthermore, the real-time data transmission module collects and transmits performance data obtained by monitoring a starting box mounted at a starting end of the common busbar 200 and the plug-in box, the controller 400 automatically analyzes the data and checks abnormal data items occurring in each cycle of inspection, and an emergency intervention module 405 generates a processing alarm, and a problem processing module 406 processes corresponding fault problems.

In some embodiments not covered by the claimed invention, the detection device even has a memory for local storage of large-capacity camera contents, thereby achieving real-time and synchronous cloud storage, as well as intelligent inspection and rapid analysis.

The inspection robot of the detection device also has the following advantages:
1. Adopting lightweight design, thereby having excellent cruising ability;
2. Having heavy load and multiple interfaces, capable of loading various devices at will and supporting customized design;
3. Integrating a variety of safety protection measures, to adapt to a variety of application scenarios;
4. Transmitting monitoring videos back to a terminal, thereby supporting functions such as real-time recording, playback, or the like;
5. Capable of identifying foreign objects and obstacles such as instruments, foreign objects, vehicles, or the like, and supporting real-time data transmission;
6. Having an expandable device architecture to meet customization requirements of different industries.

The detection device based on a three-remote monitoring mode also has at least the following functions:
1. Monitoring function of the starting box:
   Remote monitoring: obtaining three-phase voltage, three-phase current, frequency, active power, active electrical degree, power factor, harmonic content and temperature (i.e., real-time operation temperature at a joint of cables/copper bars 17) of an input branch;
   Remote signaling: obtaining over-voltage/under-voltage, phase missing, overcurrent, too high/too low frequency of the input branch, and a switching state of the input branch. It has a function of analyzing and counting amounts of required current and power, and achieves an alarm function of over-limit of parameters such as voltage, current, frequency, power, or the like. The real-time data transmission module may adopt wired and wireless communication modes such as RS485 communication interface, RS232 communication interface, 4G/5G communication interface, Zigbee communication interface, CANbus communication interface, or the like.
2. Monitoring function of the plug-in box:
   Remote monitoring: obtaining voltage, current, active power and active electrical degree of an output branch, and real-time operation temperature at pins of the plug-in box;
   Remote signaling: obtaining a switching state of the output branch. It has a function of analyzing and counting amounts of required current and power, and achieves an alarm function of over-limit of parameters such as voltage, current, power, or the like;
   Detection: using the controller to achieve determination of position information (a sequence of distances from a power input side) according to the current, and giving information such as a residual capacity, voltage drop, temperature rise, or the like.

In descriptions of the embodiments of the invention, it should be noted that terms "center", "longitudinal", "transversal", "upper", "lower", "front", "back", "left", "right", "vertical", "horizontal", "top", "bottom", "inside", "outside" or the like indicate that orientation or position relationships are based on orientation or position relationships shown in the drawings, and are only intended to facilitate descriptions of the embodiments of the invention and simplify the descriptions, rather than indicating or implying that the referred device or element must have a specific orientation, and must be constructed and operated in a specific orientation, therefore they cannot be understood as limitation of the embodiments of the invention. Furthermore, terms "first", "second" and "third" are only for the purpose of descriptions, and cannot be understood as indicating or implying relative importance.

In the descriptions of the embodiments of the invention, it should be noted that unless otherwise specified and limited clearly, terms "joint" and "connect" are understood in a broad sense, for example, they may be fixed connection, detachable connection, or integral connection; or they may be mechanical connection or electrical connection; or they may be direct connection or indirect connection through an intermediate medium. For those of ordinary skill in the art, specific meanings of the above terms in the embodiments of the invention may be understood according to a specific situation.

In the embodiments of the invention, unless otherwise specified and limited clearly, a first feature being "above" or "below" a second feature may indicate that the first feature is in direct contact with the second feature, or the first feature may be in indirect contact with the second feature through an intermediate medium. Furthermore, the first feature being "on", "above", "over" the second feature may indicate that the first feature is directly above or obliquely above the second feature, or simply indicate that a horizontal height of the first feature is higher than that of the second feature. The first feature being "under", "below", "underneath" the second feature may indicate that the first feature is directly below or obliquely below the second feature, or simply indicate that a horizontal height of the first feature is less than that of the second feature.

In descriptions of the specification, descriptions of reference terms "an embodiment", "some embodiments", "example", "specific example", or "some examples", or the like mean that specific features, structures, materials or characteristics described in combination with the embodiment or example are included in at least one embodiment or example of the embodiments of the invention. In the specification, schematic representations of the above terms are not necessarily directed to the same embodiment or example. Furthermore, the described specific features, structures, materials or characteristics may be combined in a suitable manner in any one or more embodiments or examples. Furthermore, those skilled in the art may integrate and combine different embodiments or examples described in the specification and features of different embodiments or examples, without contradicting one another.

Finally, it should be noted that the above embodiments are only intended to describe the technical solutions of the invention, rather than limiting them. Although the invention has been described in detail with reference to the foregoing embodiments, it should be understood by those of ordinary skill in the art that technical solutions described in the foregoing embodiments may still be modified, or some technical features thereof may be equivalently replaced. These modifications or replacements do not make essence of corresponding technical solutions depart from the scope of the technical solutions of the embodiments of the invention.

### INDUSTRIAL APPLICABILITY

The invention provides an AC/DC common busbar, a method for detecting performance of a busbar, and a system with a device for detecting performance of a busbar. The AC/DC common busbar includes a base plate and at least one pair of limiting protection structure. The base plate is provided with at least one pair of bar bodies which are detachable and arranged side-by-side, a same side of each of the at least one pair of bar bodies is connected to a copper bar group, and each copper bar group includes multiple copper bars arranged at intervals. Each of the at least one pair of limiting protection structures is correspondingly mounted at a respective copper bar group. Here, the limiting protection structure is configured to be separable from a corresponding copper bar group when the corresponding copper bar group is in a use state, and is configured to be inserted into a gap between adjacent copper bars in a corresponding copper bar group when the corresponding copper bar group is in a non-use state. The AC/DC common busbar may utilize a separation and assembly structure of the limiting protection structure, to implement separate checking and maintenance in case that the busbar is connected to both AC bus and DC bus simultaneously, and implement overall protection of the copper bar group and individual protection of each copper bar in case that the busbar is individually connected to the AC bus or the DC bus.

## Claims

1. An alternating current, AC/direct current, DC, common busbar (200), wherein the AC/DC common busbar (200) comprises:
a base plate (1), provided with at least one pair of bar bodies (2) which are detachable and arranged side-by-side, wherein a same side of each of the at least one pair of bar bodies (2) is connected to a copper bar group (4), and each copper bar group (4) comprises a plurality of copper bars arranged at intervals; **characterized in that** it further comprises
at least one pair of limiting protection structures (9), each of which is correspondingly mounted at a respective copper bar group (4),
wherein the limiting protection structure (9) is configured to be separable from a corresponding copper bar group (4) when the corresponding copper bar group (4) is in a use state, and is configured to be inserted into a gap between adjacent copper bars in a corresponding copper bar group (4) when the corresponding copper bar group (4) is in a non-use state;
wherein the limiting protection structure (9) comprises at least a clamping plate assembly,
wherein the clamping plate assembly comprises:
a plurality of first clamping plates (96) arranged at intervals, a first end of each of the first clamping plates (96) formed with a channel (94) respectively, each of the first clamping plates (96) configured to be inserted into the gap between adjacent copper bars when the corresponding copper bar group (4) is in the non-use state, and copper bars in a non-maintenance state configured to be correspondingly inserted into channels (94) of the first clamping plates (96) respectively when a corresponding copper bar is in a maintenance state; and
a partition plate (93), connected to a same end of each of the first clamping plates (96), and formed with a plurality of through holes (12) communicating with the channels (94) of the first clamping plates (96) respectively.

2. The AC/DC common busbar (200) of claim 1, wherein an inner wall of the first clamping plate (96) is formed with a snapping groove (106), each of outer sidewalls of the copper bar group (4) is formed with a positioning snapping block (11), and the copper bar in the non-maintenance state is configured to be inserted into the first clamping plate (96) and the positioning snapping block (11) of the copper bar in the non-maintenance state is assembled into the snapping groove (106).

3. The AC/DC common busbar (200) of claim 2, wherein the limiting protection structure (9) further comprises at least a protection assembly,
wherein the protection assembly comprises:
a plurality of protection mechanisms (10) arranged at intervals, each of the protection mechanisms (10) comprising a strut (105), a protection spring (103) and a top block (102), the strut (105) having a first end inserted into the channel (94) of the first clamping plate (96) and connected to the top block (102) through the protection spring (103), and a second end passing through the through hole (12) of the partition plate (93) and extending outward; and
a top plate (101), connected to the second end of each strut (105).

4. The AC/DC common busbar (200) of claim 3, wherein a sidewall of the strut (105) is formed with a protective snapping block (104) configured to be assembled into the snapping groove (106) when the first clamping plate (96) is inserted in the gap between adjacent copper bars.

5. The AC/DC common busbar (200) of claim 1, wherein the clamping plate assembly further comprises:
at least a second clamping plate (97), having an end connected to the partition plate (93), and arranged between adjacent first clamping plates (96) with a gap with respect to each of the first clamping plates (96); and
a pair of stopping plates (95), connected to both ends of the partition plate (93) respectively and positioned on both sides of all of the first clamping plates (96).

6. The AC/DC common busbar (200) of any one of claims 1 to 5, wherein the limiting protection structure (9) further comprises:
at least one pair of collars (91), connected to a side of the partition plate (93) facing away from the first clamping plates (96);
a connection rod (8), detachably inserted into each of the collars (91);
a connection tube (5), fixedly connected to the base plate (1) between the bar bodies (2), an end of the connection tube (5) away from the base plate (1) fixedly connected to a connection nut (6); and
a connection bolt (7), having a first end connected to the connection rod (8) and a second end assembled into the connection nut (6) through threads, and inserted into the connection tube (5) in an extensible and retractable manner.

7. The AC/DC common busbar (200) of any one of claims 1 to 5, wherein the bar body (2) is detachably connected to the base plate (1) through a fixing mechanism (3),
wherein the fixing mechanism (3) comprises:
a projection block (31), arranged on the base plate (1);
a pair of side plates (34), connected to the base plate (1) respectively and positioned on both sides of the projection block (31) respectively, to form, between the projection block (31) and the pair of side plates (34), a pair of mounting positions where the bar body (2) is disassembled and assembled;
a fixing nut (33), fixedly connected to the side plate (34); and
a limiting bolt (35), assembled into the fixing nut (33) through threads and connected to the bar body (2) at the mounting position through a limiting spring (32).

8. A method for detecting performance of a busbar, **characterized in that** the method detects performance of the AC/DC common busbar (200) of any one of claims 1 to 7, and comprises:
driving an inspection robot (100) to slide along a plurality of AC/DC common busbars (200) connected in sequence, and performing, by the inspection robot (100), a continuous detection at a joint of adjacent AC/DC common busbars (200), to obtain performance data,
wherein the performance data comprises at least one of:
at least one of voltage, current or power at the joint acquired by a bus performance sensor;
a plug-in torque at the joint acquired by a deformation sensor;
at least one of temperature or humidity at the joint acquired by a temperature and humidity sensor; or
image data at the joint acquired by an image acquisition mechanism and identifying obstacles around the AC/DC common busbar (200).

9. The method of claim 8, wherein the performance data further comprises:
communication state data at the joint acquired by a communication detection sensor.

10. The method of claim 8 or 9, wherein the inspection robot (100) is in signal connection with a controller (400), and the method further comprises:
determining, by the controller (400), a navigation mode, and driving the inspection robot (100) to move through at least a tracked navigation mode or a trackless navigation mode.

11. The method of claim 10, wherein the controller (400) is connected to an emergency intervention module (405), and the method further comprises:
transmitting, by the inspection robot (100), the performance data to the controller (400);
analyzing, by the controller (400), the performance data, to obtain an analysis result; and
in response to the analysis result indicating that the performance data reaches a boundary of preset early warning parameters or exceeds a range of the preset early warning parameters, starting the emergency intervention module (405) to correct deviation.

12. A system comprising the AC/DC common busbar (200) of anyone of claims 1 to 7 and a device for detecting performance of the AC/DC common busbar (200), wherein the device comprises:
a controller (400); and
an inspection robot (100), in signal connection with the controller (400), slidable along a length direction of the AC/DC common busbar (200), capable of passing through a joint of adjacent AC/DC common busbars (200) during sliding, and comprising a bus performance sensor, a temperature and humidity sensor, a deformation sensor and an image acquisition mechanism.

## Patentansprüche

1. Gemeinsame Wechselstrom, AC,/Gleichstrom, DC,-Sammelschiene (200), wobei die gemeinsame AC/DC-Sammelschiene (200) umfasst:
eine Grundplatte (1), die mit mindestens einem Paar Schienenkörpern (2) versehen ist, die abnehmbar und nebeneinander eingerichtet sind, wobei eine gleiche Seite jedes des mindestens einen Paars von Schienenkörpern (2) mit einer Kupferschienengruppe (4) verbunden ist und jede Kupferschienengruppe (4) eine Vielzahl von in Abständen eingerichteten Kupferschienen umfasst;
**dadurch gekennzeichnet, dass** es ferner umfasst
mindestens ein Paar Begrenzungsschutzstrukturen (9), von denen jede entsprechend an einer jeweiligen Kupferschienengruppe (4) montiert ist,
wobei die Begrenzungsschutzstruktur (9) konfiguriert ist, um von einer entsprechenden Kupferschienengruppe (4) trennbar zu sein, wenn sich die entsprechende Kupferschienengruppe (4) in einem Verwendungszustand befindet, und konfiguriert ist, um in einen Spalt zwischen angrenzenden Kupferschienen in einer entsprechenden Kupferschienengruppe (4) eingefügt zu werden, wenn sich die entsprechende Kupferschienengruppe (4) in einem Nichtverwendungszustand befindet;
wobei die Begrenzungsschutzstruktur (9) mindestens eine Klemmplattenbaugruppe umfasst,
wobei die Klemmplattenbaugruppe umfasst:
eine Vielzahl von in Abständen eingerichteten ersten Klemmplatten (96), wobei ein erstes Ende jeder der ersten Klemmplatten (96) jeweils mit einem Kanal (94) ausgebildet ist, wobei jede der ersten Klemmplatten (96) konfiguriert ist, um in den Spalt zwischen angrenzenden Kupferschienen eingesetzt zu werden, wenn sich die entsprechende Kupferschienengruppe (4) in dem Nichtverwendungszustand befindet, und wobei Kupferschienen in einem Nichtwartungszustand konfiguriert sind, um entsprechend in die Kanäle (94) der ersten Klemmplatten (96) eingesetzt zu werden, wenn sich eine entsprechende Kupferschiene in einem Wartungszustand befindet; und
eine Trennplatte (93), die mit einem gleichen Ende jeder der ersten Klemmplatten (96) verbunden ist und mit einer Vielzahl von Durchgangslöchern (12) ausgebildet ist, die jeweils mit den Kanälen (94) der ersten Klemmplatten (96) kommunizieren.

2. Gemeinsame AC/DC-Sammelschiene (200) nach Anspruch 1, wobei eine Innenwand der ersten Klemmplatte (96) mit einer Schnappnut (106) ausgebildet ist, jede der äußeren Seitenwände der Kupferschienengruppe (4) mit einem Positionierungsschnappblock (11) ausgebildet ist und die Kupferschiene in dem Nicht-Wartungszustand konfiguriert ist, um in die erste Klemmplatte (96) eingesetzt zu werden und der Positionierungsschnappblock (11) der Kupferschiene in dem Nicht-Wartungszustand in die Schnappnut (106) zusammengebaut wird.

3. Gemeinsame AC/DC-Sammelschiene (200) nach Anspruch 2, wobei die Begrenzungsschutzstruktur (9) ferner mindestens eine Schutzbaugruppe umfasst,
wobei die Schutzbaugruppe umfasst:
eine Vielzahl von in Abständen eingerichteten Schutzmechanismen (10), jeder der Schutzmechanismen (10) umfassend eine Strebe (105), eine Schutzfeder (103) und einen oberen Block (102), wobei die Strebe (105) ein erstes Ende, das in den Kanal (94) der ersten Klemmplatte (96) eingesetzt und über die Schutzfeder (103) mit dem oberen Block (102) verbunden ist, und ein zweites Ende aufweist, das über das Durchgangsloch (12) der Trennplatte (93) verläuft und sich nach außen erstreckt; und
eine obere Platte (101), die mit dem zweiten Ende jeder Strebe (105) verbunden ist.

4. Gemeinsame AC/DC-Sammelschiene (200) nach Anspruch 3, wobei eine Seitenwand der Strebe (105) mit einem schützenden Schnappblock (104) ausgebildet ist, der konfiguriert ist, um in die Schnappnut (106) zusammengebaut zu werden, wenn die erste Klemmplatte (96) in den Spalt zwischen angrenzenden Kupferschienen eingesetzt wird.

5. Gemeinsame AC/DC-Sammelschiene (200) nach Anspruch 1, wobei die Klemmplattenbaugruppe ferner umfasst:
mindestens eine zweite Klemmplatte (97), die ein Ende aufweist, das mit der Trennplatte (93) verbunden ist und zwischen angrenzenden ersten Klemmplatten (96) mit einem Spalt hinsichtlich jeder der ersten Klemmplatten (96) eingerichtet ist; und
ein Paar Anschlagplatten (95), die jeweils mit beiden Enden der Trennplatte (93) verbunden sind und auf beiden Seiten aller der ersten Klemmplatten (96) positioniert sind.

6. Gemeinsame AC/DC-Sammelschiene (200) nach einem der Ansprüche 1 bis 5, wobei die Begrenzungsschutzstruktur (9) ferner umfasst:
mindestens ein Paar Kragen (91), die mit einer Seite der Trennplatte (93) verbunden sind, die von den ersten Klemmplatten (96) abgewandt ist;
eine Verbindungsstange (8), die in jeden der Kragen (91) lösbar eingesetzt ist;
ein Verbindungsrohr (5), das zwischen den Schienenkörpern (2) mit der Grundplatte (1) fest verbunden ist, wobei ein Ende des Verbindungsrohrs (5), das von der Grundplatte (1) entfernt ist, mit einer Verbindungsmutter (6) fest verbunden ist; und
einen Verbindungsbolzen (7), der ein erstes Ende, das mit der Verbindungsstange (8) verbunden ist, und ein zweites Ende aufweist, das über Gewinde in die Verbindungsmutter (6) zusammengebaut wird und der auf eine erstreckbare und einfahrbare Weise in das Verbindungsrohr (5) eingesetzt ist.

7. Gemeinsame AC/DC-Sammelschiene (200) nach einem der Ansprüche 1 bis 5, wobei der Schienenkörper (2) über einen Befestigungsmechanismus (3) mit der Grundplatte (1) lösbar verbunden ist,
wobei der Befestigungsmechanismus (3) umfasst:
einen Vorsprungsblock (31), der auf der Grundplatte (1) eingerichtet ist;
ein Paar Seitenplatten (34), die jeweils mit der Grundplatte (1) verbunden und jeweils auf beiden Seiten des Vorsprungsblocks (31) positioniert sind, um, zwischen dem Vorsprungsblock (31) und dem Paar Seitenplatten (34) ein Paar Montagepositionen auszubilden, an denen der Schienenkörper (2) zerlegt und zusammengebaut wird;
eine Befestigungsmutter (33), die mit der Seitenplatte (34) fest verbunden ist; und
einen Begrenzungsbolzen (35), der über Gewinde in die Befestigungsmutter (33) zusammengebaut und an der Montageposition über eine Begrenzungsfeder (32) mit dem Schienenkörper (2) verbunden ist.

8. Verfahren zum Erkennen einer Leistung einer Sammelschiene,
**dadurch gekennzeichnet, dass** das Verfahren die Leistung der gemeinsamen AC/DC-Sammelschiene (200) nach einem der Ansprüche 1 bis 7 erkennt und umfasst:
Antreiben eines Inspektionsroboters (100), um ihn entlang einer Vielzahl von in Reihe geschalteten gemeinsamen AC/DC-Sammelschienen (200) gleiten zu lassen, und Durchführen, durch den Inspektionsroboter (100), einer kontinuierlichen Erkennung an einer Verbindungsstelle angrenzender gemeinsamer AC/DC-Sammelschienen (200), um Leistungsdaten zu erhalten,
wobei die Leistungsdaten mindestens eines umfassen von:
mindestens eines von Spannung, Strom oder Leistung an der Verbindungsstelle, die/der durch einen Sammelschienenleistungssensor erfasst wird;
ein Steckmoment an der Verbindungsstelle, das durch einen Deformationssensor erfasst wird;
mindestens eines von Temperatur oder Feuchtigkeit an der Verbindungsstelle, die durch einen Temperatur- und Feuchtigkeitssensor erfasst wird; oder
Bilddaten an der Verbindungsstelle, die durch einen Bilderfassungsmechanismus erfasst werden und die Hindernisse rund um die gemeinsame AC/DC-Sammelschiene (200) identifizieren.

9. Verfahren nach Anspruch 8, wobei die Leistungsdaten ferner umfassen:
Kommunikationszustandsdaten an der Verbindungsstelle, die durch einen Kommunikationserkennungssensor erkannt werden.

10. Verfahren nach Anspruch 8 oder 9, wobei der Inspektionsroboter (100) in Signalverbindung mit einem Controller (400) steht, und das Verfahren ferner umfasst:
Bestimmen, durch den Controller (400), eines Navigationsmodus und Antreiben des Inspektionsroboters (100), um sich über mindestens einen verfolgten Navigationsmodus oder einen nicht verfolgten Navigationsmodus zu bewegen.

11. Verfahren nach Anspruch 10, wobei der Controller (400) mit einem Notfallinterventionsmodul (405) verbunden ist, und das Verfahren ferner umfasst:
Übertragen, durch den Inspektionsroboter (100), der Leistungsdaten an den Controller (400);
Analysieren, durch den Controller (400), der Leistungsdaten, um ein Analyseergebnis zu erhalten; und
als Reaktion auf das Analyseergebnis, das anzeigt, dass die Leistungsdaten eine Grenze voreingestellter Frühwarnparameter erreichen oder einen Bereich der voreingestellten Frühwarnparameter überschreiten, Starten des Notfallinterventionsmoduls (405), um eine Abweichung zu korrigieren.

12. System, umfassend die gemeinsame AC/DC-Sammelschiene (200) nach einem der Ansprüche 1 bis 7 und eine Vorrichtung zum Erkennen der Leistung der gemeinsamen AC/DC-Sammelschiene (200), wobei die Vorrichtung umfasst:
einen Controller (400); und
einen Inspektionsroboter (100), der in Signalverbindung mit dem Controller (400) steht und entlang einer Längsrichtung der gemeinsamen AC/DC-Sammelschiene (200) gleitbar ist, der in der Lage ist, während des Gleitens über eine Verbindungsstelle angrenzender gemeinsamer AC/DC-Sammelschienen (200) hindurchzuverlaufen und umfassend einen Sammelschienenleistungssensor, einen Temperatur- und Feuchtigkeitssensor, einen Verformungssensor und einen Bilderfassungsmechanismus.

## Revendications

1. Barre omnibus commune à courant alternatif, CA/courant continu, CC (200), dans laquelle la barre omnibus commune CA/CC (200) comprend :
une plaque de base (1), pourvue d'au moins une paire de corps de barre (2) détachables et disposés côte à côte, dans laquelle un même côté de chacune des au moins une paire de corps de barre (2) est reliée à un groupe de barres de cuivre (4), et chaque groupe de barres de cuivre (4) comprend une pluralité de barres de cuivre disposées à intervalles réguliers ;
**caractérisé en ce qu'**elle comprend en outre
au moins une paire de structures de protection de limitation (9), chacune d'entre elles étant montée de manière correspondante sur un groupe de barres de cuivre (4) respectif,
dans laquelle la structure de protection de limitation (9) est conçue pour être séparée d'un groupe de barres de cuivre (4) correspondant lorsque le groupe de barres de cuivre (4) correspondant est en état d'utilisation, et est conçue pour être insérée dans un espace entre des barres de cuivre adjacentes dans un groupe de barres de cuivre (4) correspondant lorsque le groupe de barres de cuivre (4) correspondant n'est pas en état d'utilisation ;
dans laquelle la structure de protection de limitation (9) comprend au moins un ensemble de plaques de serrage,
dans laquelle l'ensemble de plaques de serrage comprend :
une pluralité de premières plaques de serrage (96) disposées à intervalles réguliers, une première extrémité de chacune des premières plaques de serrage (96) étant formée par un canal (94) respectivement, chacune des premières plaques de serrage (96) étant conçue pour être insérée dans l'espace entre les barres de cuivre adjacentes lorsque le groupe de barres de cuivre (4) correspondant est dans l'état de non-utilisation, et les barres de cuivre dans un état de non-entretien étant conçues pour être insérées de manière correspondante dans les canaux (94) des premières plaques de serrage (96) respectivement lorsqu'une barre de cuivre correspondante se trouve dans un état d'entretien ; et
une plaque de séparation (93) reliée à une même extrémité de chacune des premières plaques de serrage (96) et formée par une pluralité de trous traversants (12) communiquant avec les canaux (94) des premières plaques de serrage (96) respectivement.

2. Barre omnibus commune CA/CC (200) selon la revendication 1, dans laquelle une paroi intérieure de la première plaque de serrage (96) est formée par une rainure d'encliquetage (106), chacune parmi des parois latérales extérieures du groupe de barres de cuivre (4) est formée par un bloc d'encliquetage de positionnement (11), et la barre de cuivre dans l'état de non-entretien est conçue pour être insérée dans la première plaque de serrage (96) et le bloc d'encliquetage de positionnement (11) de la barre de cuivre dans l'état de non-entretien est assemblé dans la rainure d'encliquetage (106).

3. Barre omnibus commune CA/CC (200) selon la revendication 2, dans laquelle la structure de protection de limitation (9) comprend en outre au moins un ensemble de protection,
dans laquelle l'ensemble de protection comprend :
une pluralité de mécanismes de protection (10) disposés à intervalles réguliers, chacun des mécanismes de protection (10) comprenant une entretoise (105), un ressort de protection (103) et un bloc supérieur (102), l'entretoise (105) présentant une première extrémité insérée dans le canal (94) de la première plaque de serrage (96) et reliée au bloc supérieur (102) par l'intermédiaire du ressort de protection (103), et une seconde extrémité traversant le trou traversant (12) de la plaque de séparation (93) et s'étendant vers l'extérieur ; et
une plaque supérieure (101) reliée à la seconde extrémité de chaque entretoise (105).

4. Barre omnibus commune CA/CC (200) selon la revendication 3, dans laquelle une paroi latérale de l'entretoise (105) est formée par un bloc d'encliquetage de protection (104) conçu pour être assemblé dans la rainure d'encliquetage (106) lorsque la première plaque de serrage (96) est insérée dans l'espace entre les barres de cuivre adjacentes.

5. Barre omnibus commune CA/CC (200) selon la revendication 1, dans laquelle l'ensemble de plaques de serrage comprend en outre :
au moins une seconde plaque de serrage (97) présentant une extrémité reliée à la plaque de séparation (93), et disposée entre les premières plaques de serrage (96) adjacentes avec un espace par rapport à chacune des premières plaques de serrage (96) ; et
une paire de plaques d'arrêt (95) reliées aux deux extrémités de la plaque de séparation (93) respectivement et positionnées de part et d'autre de toutes les premières plaques de serrage (96).

6. Barre omnibus commune CA/CC (200) selon l'une quelconque des revendications 1 à 5, dans laquelle la structure de protection de limitation (9) comprend en outre :
au moins une paire de colliers (91) reliés à un côté de la plaque de séparation (93) opposé aux premières plaques de serrage (96) ;
une tige de liaison (8) insérée de manière amovible dans chacun des colliers (91) ;
un tube de liaison (5) relié de manière fixe à la plaque de base (1) entre les corps de barre (2), une extrémité du tube de connexion (5) éloignée de la plaque de base (1) étant reliée de manière fixe à un écrou de connexion (6) ; et
un boulon de liaison (7) présentant une première extrémité reliée à la tige de liaison (8) et une seconde extrémité assemblée dans l'écrou de liaison (6) par des filetages et insérée dans le tube de liaison (5) de manière extensible et rétractable.

7. Barre omnibus commun CA/CC (200) selon l'une des revendications 1 à 5, dans laquelle le corps de barre (2) est relié de manière amovible à la plaque de base (1) par l'intermédiaire d'un mécanisme de fixation (3),
dans laquelle le mécanisme de fixation (3) comprend :
un bloc de projection (31) disposé sur la plaque de base (1) ;
une paire de plaques latérales (34) reliées à la plaque de base (1) respectivement et positionnées de part et d'autre de du bloc de projection (31) respectivement, pour former, entre le bloc de projection (31) et la paire de plaques latérales (34), une paire de positions de montage dans lesquelles le corps de barre (2) est désassemblé et assemblé ;
un écrou de fixation (33) relié de manière fixe à la plaque latérale (34) ; et
un boulon de limitation (35) assemblé à l'écrou de fixation (33) par des filetages et relié au corps de barre (2) à la position de montage par un ressort de limitation (32).

8. Procédé permettant la détection des performances d'une barre omnibus, **caractérisé en ce que** le procédé permet de détecter les performances de la barre omnibus commune CA/CC (200) selon l'une quelconque des revendications 1 à 7, et comprend :
la conduite d'un robot d'inspection (100) afin de coulisser le long d'une pluralité de barres omnibus CA/CC (200) reliées en série, et la réalisation, par le robot d'inspection (100), d'une détection continue au niveau d'une jointure de barres omnibus CA/CC (200) adjacentes, afin d'obtenir des données de performance,
dans lequel les données de performance comprennent au moins l'un parmi :
au moins l'un parmi une tension, un courant ou une puissance au niveau de la jointure, acquise par un capteur de performance du bus ;
un couple d'enfichage au niveau de la jointure, acquis par un capteur de déformation ;
au moins l'un parmi une température ou une humidité au niveau de la jointure, acquise par un capteur de température et d'humidité ; ou
des données d'image au niveau de la jointure, acquises par un mécanisme d'acquisition d'images et l'identification d'obstacles autour de la barre omnibus commune CA/CC (200).

9. Procédé selon la revendication 8, dans lequel les données de performance comprennent en outre :
des données d'état de communication au niveau de la jointure, acquises par un capteur de détection de communication.

10. Procédé selon la revendication 8 ou 9, dans lequel le robot d'inspection (100) est en connexion de signal avec un dispositif de commande (400), et le procédé comprend en outre :
la détermination, par le dispositif de commande (400), d'un mode de navigation, et la conduite du robot d'inspection (100) pour qu'il se déplace dans au moins un mode de navigation guidée ou un mode de navigation non guidée.

11. Procédé selon la revendication 10, dans lequel le dispositif de commande (400) est connecté à un module d'intervention d'urgence (405), et le procédé comprend en outre :
la transmission, par le robot d'inspection (100), des données de performance au dispositif de commande (400) ;
l'analyse, par le dispositif de commande (400), des données de performance, afin d'obtenir un résultat d'analyse ; et
en réponse au résultat de l'analyse indiquant que les données de performance atteignent une limite des paramètres d'alerte précoce prédéfinis ou dépassent une plage des paramètres d'alerte précoce prédéfinis, le démarrage du module d'intervention d'urgence (405) pour corriger l'écart.

12. Système comprenant la barre omnibus commune CA/CC (200) selon l'une quelconque des revendications 1 à 7 et un dispositif de détection de performances de la barre omnibus commune CA/CC (200), dans lequel le dispositif comprend :
un dispositif de commande (400) ; et
un robot d'inspection (100) en connexion de signal avec le dispositif de commande (400), pouvant coulisser le long d'une direction de longueur de la barre omnibus commune CA/CC (200), capable de traverser une jointure de barres omnibus communes CA/CC (200) adjacentes pendant le coulissement, et comprenant un capteur de performance de bus, un capteur de température et d'humidité, un capteur de déformation et un mécanisme d'acquisition d'images.
